# EUROPEAN PATENT SPECIFICATION

(11) **EP 1 897 994 B1**
(45) Date of publication and mention of the grant of the patent: **01.11.2017**
(21) Application number: 07075731.5
(22) Date of filing: 27.08.2007
(51) Int. Cl.: E01C 5/00

(54) **Assembly and method for forming a floor**
Anordnung und Verfahren zum Herstellen eines Bodens
Ensemble et procédé pour créer un sol

(30) Priority: 25.08.2006 NL 1032369
(43) Date of publication of application: 12.03.2008
(73) Proprietor: Zoontjens Beton B.V., 5015 TA Tilburg (NL)
(72) Inventor: Maassen, Richardus Wilhelmus Theodorus Maria, 5211 CM DEN BOSCH (NL)
(74) Representative: Wijnstra, Reinier

(56) References cited:
- EP-A1- 0 203 226
- WO-A-01/90497
- DE-U1- 29 918 998

## Description

The present invention relates to an assembly a coupling element and a method for forming a floor on a substrate.

A system is known from EP-0203226 for forming a parking roof or a tiled floor on a roof. The tiled floor comprises substantially square concrete tiles which are provided at the four corners on the underside with quarter-circular recesses which are open on the underside of the tiles. The recesses of adjacent concrete tiles together form a circular recess. Arranged under the circular recess is a circular support element having thereon a round tensioning element with a diameter which can be increased by tightening a bolt arranged in the tensioning element. The diameter of the tensioning element can be increased until the outer wall of the tensioning element connects to the recesses of the respective concrete tiles for the purpose of absorbing horizontal shear forces, i.e. shear forces in the plane of the concrete tiles.

Although it has been applied successfully, the known system has been found to have several drawbacks. Vertical movement of the tiles is for instance possible, whereby the tiles can make a tipping movement when they are loaded. The tipping movement causes a noise which is referred to as the rattling or hollow sound of the tile. The concrete tiles further vary in thickness so that adjacent tiles arranged on the support element can have a differing height. Levelling of individual tiles by manually arranging roofing felt is expensive and time-consuming. Both the rattling sound and the difference in height are perceived by users as a nuisance, for instance when a vehicle is driven over the tiles.

In an embodiment of the system of EP-0203226 chambers are arranged in the side walls of the tiles at a distance from the underside of the tiles. A disc-shaped tensioning element is arranged in the chambers for mutual fixing of the tiles. This embodiment has however been found to be unusable in practice. It has been found that the tiles and/or the tensioning element can break due to temperature changes or vertical movement under heavy load, for instance due to trucks being driven over the tiles.

WO-01/90497-A1 provides a floor system wherein four tiles are fixed on a round base with their respective corner points. A clamping plate arranged on top of the four corner points is connected with a bolt to the round base in order to ensure fixation. Due to the rigid fixation the tiles are enclosed in their specific position and relative (vertical) movement of the tiles is impossible. The known system is hereby unsuitable for relatively heavy loading.

DE-29918998-U1 provides a tensioning element for tensioning tiles against each other. The tensioning element comprises an elongate flexible body which is provided with a bolt extending over the longitudinal axis. The bolt is connected at an outer end to a wedge-shaped element. The wedge-shaped element can be pulled into the flexible body by tightening the bolt, wherein the wedge-shaped element pushes the underside of the flexible body outward. In another embodiment DE-29918998-U1 provides a tensioning element which is arranged on a round base plate.

The tensioning element of DE-29918998-U1 has the drawback that the flexible body is pushed outward on the underside thereof or, when the base plate is applied, directly above the base plate when the bolt is tightened. When tiles are applied the body then pushes against the underside of the tiles so that the tiles can rattle or make a hollow sound relative to each other.

The present invention has for its object to provide an improved system for forming a floor.

According to a first aspect, the invention provides for this purpose an assembly for forming a floor on a substrate, comprising:
- a number of tiles arranged substantially in a plane and having a top side, a bottom side and side surfaces;
- a coupling element arranged between adjacent tiles and having a dimension which is variable in the direction of the plane,
wherein the coupling element is adapted to engage on an engaging surface coupled to the side surface of a tile, and the coupling element is at least partially elastic,
wherein the engaging surface comprises a recess with a curved wall having at least an axis of curvature in the plane of the tiles for producing, in co-action with the coupling element, a force transversely of the plane of the tiles which gradually increases as load increases.

The coupling element has a variable dimension in the direction of the plane of the floor, and fixes the tiles relative to each other. The fixation acts not only in horizontal direction but also in vertical direction transversely of the plane of the tiles. The co-action between the gradually sloping wall of the engaging surface and the coupling element produces a force in vertical direction which gradually increases as load increases. Some freedom of movement in the vertical direction is necessary in order to prevent breaking of the tiles or the coupling element. The increasing vertical force here ensures that the tiles return to their initial position after the load has been removed.

In an embodiment the wall of the recess is curved substantially in two directions. In another embodiment the wall of the recess has a continuous progression. The recess has for instance the shape of an ellipse or of an ellipsoid. The recess is preferably arranged at about the position of the centre of the side surface of the tile. Such a recess can be arranged in simple manner, for instance in the wall of the tile or in another engaging surface. The recess can be arranged cost-effectively in harder materials such as concrete. The recess is found to enable a good fixation in vertical direction, in combination with sufficient freedom of movement.

The outer dimension of the coupling element preferably has the form of an ellipse or an ellipsoid. The form of the recess thus fits with the outer dimension of the coupling element. The mutually connecting forms ensure a better fixation. The coupling element is preferably at least partially elastic so that the tiles can move relative to each other in the case of (heavy) load.

Corners of the tiles are preferably provided with a chamfered part for forming the engaging surface in which the concave recess is arranged.

In an embodiment each corner of the tiles is provided with a separate adjusting element according to another aspect of the invention which is provided with an upright strip connecting to the respective corner of the tile for the purpose of forming the engaging surface in which the recess is arranged. The adjusting element provides a cost-effective solution for obtaining the advantages of the invention. The arranging of the recess in the upright strip is simpler and cheaper than arranging the recess in the material of the tile. The recess can for instance be included in a mould so that the recess is already arranged in the upright strip each time the plastic of the adjusting element is moulded. This adjusting element thus obviates grinding of the recess into the material of the tile.

The adjusting element according to the invention comprises a plate preferably provided with an upright wall of a predetermined thickness which connects to a side surface of the tile. The upright wall provides a desired intermediate distance between adjacent tiles. The predetermined thickness of the upright walls is for instance in the order of 2 mm.

In an embodiment the adjusting element is provided with protrusions on the side opposite the upright strip. This is found to ensure an improved drainage.

Plates of different adjusting elements optionally have a different thickness in order to compensate variations in thickness of the respective tiles. The thicknesses of the plates of different adjusting elements vary for instance in steps in the order of 1 mm.

A flexible support element is for instance arranged under the corners of the tiles in order to damp vibrations and distribute forces.

The coupling element comprises for instance:
- a first clamping part;
- a second clamping part;
- a flexible middle part arranged between the first clamping part and the second clamping part;
- a bolt arranged through the clamping parts and the middle part for varying the diameter of the middle part,
wherein the first clamping part has a T-shaped cross-section and a tapering end;
wherein the second clamping part has a T-shaped cross-section and wherein an outer end of the second clamping part is provided with an opening for receiving the tapering end of the first clamping part; and
wherein the flexible middle part is arranged between the T-parts and round the tapering end of the first clamping part and the outer end of the second clamping part.

The coupling element according to the present invention takes a separate form and does not require a base plate. The coupling element can thus be easily replaced or applied in existing tile floors. The coupling element according to the invention herein has a construction wherein the flexible middle part expands in the centre when the bolt is tightened. When it expands the coupling element herein has an outer dimension which connects to the recess. The outer dimension of the coupling element is for instance curved substantially in a single direction or in two directions. The coupling element thus enables a gradually increasing force in vertical direction under load. The coupling element according to the invention has a construction which is more robust and less vulnerable than known coupling elements.

According to another aspect, the invention provides an adjusting element for an assembly as described above.

According to yet another aspect, the invention provides a coupling element for an assembly as described above.

According to a further aspect, the invention provides a tile provided with a recess for an assembly as described above.

The invention also provides a method for forming a floor on a substrate, comprising the steps of:
- arranging substantially in a plane a number of tiles with a top side, a bottom side and side surfaces;
- arranging a coupling element with a dimension which is variable in the direction of the plane between adjacent tiles, wherein a recess with a curved wall having at least an axis of curvature in the plane of the tiles is arranged on one or more of the side surfaces of the tiles;
wherein the coupling element is at least partially elastic, and adapted to engage in the recess for producing a force transversely of the plane of the tiles which gradually increases as load increases.

Further advantages and features of the invention are shown in the accompanying drawings, in which:
- fig. 1 shows a partly exploded perspective view of a first embodiment of an assembly according to the present invention;
- fig. 2 shows a detail of the embodiment of fig. 1 with a stabilizing element in a first position of use;
- fig. 3 shows a perspective view of a stabilizing element according to the present invention in a second position of use;
- fig. 4 shows a cross-sectional side view of an embodiment of a stabilizing element according to the invention;
- fig. 5 shows a schematic top view of an assembly according to the present invention;
- fig. 6 is a partly exploded perspective view of a second embodiment of an assembly according to the present invention;
- fig. 7 is a partly exploded perspective view of a third embodiment of an assembly according to the present invention; and
- fig. 8 shows a clarification in detail of the embodiment of fig. 1.

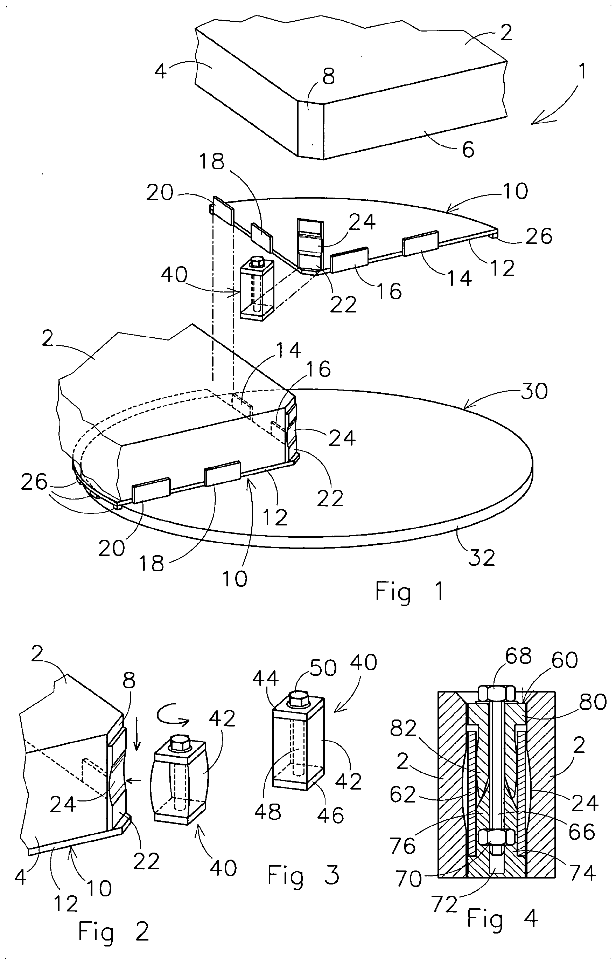

As shown in fig. 1, an assembly 1 for forming a floor according to the present invention comprises one or more tiles 2. Tiles 2 can have any desired shape and dimension. In the embodiment shown in fig. 1 the tiles are elongate or square and provided with side walls 4, 6. Tile 2 is provided at a corner with chamfered part 8. The tiles are arranged in a plane and have a flat top side and/or underside.

An adjusting element 10 is arranged under the corner of the tile. Adjusting element 10 comprises a quarter disc-shaped plate 12 which is provided on the straight sides with upright walls 14, 16, 18, 20. The upright walls are arranged in mutually offset manner. This means that upright walls 14, 16 of an adjusting element come to lie between and/or next to the upright walls 18, 20 of another adjacent adjusting element of the assembly, as shown in fig. 1. An intermediate space between two adjacent tiles 2 is thus determined by the thickness of upright walls 14-20. Adjusting element 10 is provided at a corner with a upright strip 22. A concave recess 24 is arranged in the upright strip. The concave recess is concave in height direction of the upright strip, i.e. transversely of the plane of the tiles. On the rounded side the plate 12 of adjusting element 10 is provided with protrusions 26. Protrusions 26 are arranged on plate 12 with some mutual spacing opposite the side where walls 14-20 and strip 22 extend. The mutual spacing between the protrusions serves, among other purposes, for the drainage of rainwater during storage of the tiles. The protrusions serve here to fix a support element.

Adjusting elements 10 are for instance arranged on the underside of the corners of tiles 2 by means of glueing. Upright walls 14-20 herein connect to side walls 4, 6 of tiles 2. Upright strips 22 connect to chamfered parts 8 of tiles 2. Adjusting elements 10 with tiles 2 thereon are arranged on a disc-shaped support element 30. Support element 30 is preferably of an elastic material, such as rubber or an elastic plastic, in order to damp vibrations. Protrusions 26 connect to a side edge 32 of the support element and thus fix the support element.

A coupling element 40 is arranged connecting to upright strips 22. As shown more clearly in fig. 2 and 3, coupling element 40 comprises an elastic, beam-like middle part 42 which is enclosed between two harder clamping parts 44, 46 (fig. 3). A bolt 48 is arranged through coupling element 40 and has a screw head 50 which can be reached above clamping part 44.

Coupling part 40 can be compressed by means of cotter bolt 48. Middle part 42 can expand correspondingly, wherein side walls of middle part 42 connect to upright strips 22 and the recesses 24 arranged therein.

As shown in fig. 4, an embodiment of a coupling part 60 comprises an elastic body 62 of a suitable material such as rubber or plastic. Elastomers of polyurethane (PU) will for instance suffice as plastic. Body 62 is for instance tubular, cylindrical or beam-like. An elongate, continuous opening is arranged in body 62. Expanding elements, such as a (cotter) bolt 66, are arranged in the opening of body 62. Cotter bolt 66 comprises a bolt 68 at a first outer end and a nut 70 at the opposite outer end. Nut 70 is embedded in a clamping part 74 which is provided with an elongate opening 72 and has a T-shaped cross-section. Outer end 76 of clamping part 74 is tapering. The tapering end 76 is for instance pyramid-shaped or conical. A clamping part 80 of T-shaped cross-section is arranged at the end of coupling element 60 opposite clamping part 74. Clamping part 80 is provided with an outer end 82 which is provided with an opening for receiving the tapering outer end 76. The opening of outer end 82 for instance takes the form of an inverted pyramid or cone. Flexible body 62 is arranged between the T-parts and round outer ends 76, 82 of clamping part 74 and clamping part 80. Tiles 2 with their recesses 24 are also shown.

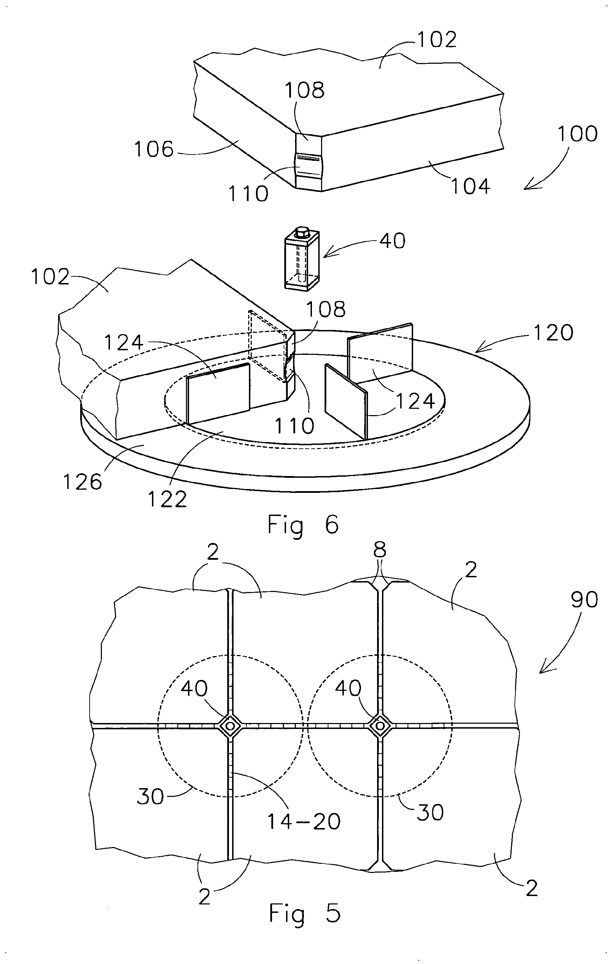

A floor 90 assembled from the above described components is shown in fig. 5. Tiles 2 are roughly square with chamfered corners 8. The intermediate distance between adjacent tiles 2 is determined by the thickness of upright walls 14-20. The corners of tiles 2 rest on support elements 30. Coupling elements 40 are arranged between the corners. Coupling elements 40 are compressed by cotter bolt 48 such that middle part 42 has expanded into recesses 24.

In another embodiment, shown in fig. 6, an assembly 100 for forming a floor comprises one or more tiles 102. The tiles are provided with side walls 104, 106. Tiles 102 are provided at a corner with a chamfered part 108. A concave recess 110 is arranged roughly in the centre of chamfered part 108.

Tiles 102 are arranged with their corners on positioning element 120. Positioning element 120 comprises a disc-shaped plate 122 which is provided on the top side with upright walls 124. Since tiles 102 are square or elongate in the shown embodiment, plate 122 is provided with four upright walls 124. If other tile shapes are used with more or fewer side walls, more or fewer upright walls 124 can likewise be provided. Side walls 124 position tiles 102 in the correct manner and the thickness of upright walls 124 provides for a desired mutual spacing between the tiles.

Plate 122 is arranged in a circular recess in a top side of support element 126. The circular recess is arranged such that the top side of plate 122 is roughly flush with the top side of support element 126.

Plate 122, upright walls 124 and/or support element 126 are preferably flexible. A suitable material is for instance natural or synthetic rubber. Upright walls 124 have a height which is in the order of the height of side walls 104, 106.

In a practical embodiment the support element 126 has a diameter in the order of 400 mm and a thickness of about 30 mm. Plate 122 has a diameter in the order of 200 mm and a thickness of about 2 mm. Walls 124 have for instance a thickness in the order of 2 mm.

At the position where the corners of tiles 102 come together, a coupling element 40 is arranged therebetween. Coupling element 40 is otherwise the same as the coupling element shown in fig. 1-3. The coupling element shown in fig. 4 can also be used. A convex outer wall of coupling element 40 engages in the concave recess 110 of tiles 102 for fixing thereof in vertical and horizontal direction.

In top view a floor assembled from tiles 102 and support elements 120 appears substantially the same as the assembly shown in fig. 5.

Variations in thickness of tiles 102 are absorbed by grinding tiles 102 to the desired thickness, at least at their corners. For this purpose the tiles 102 are for instance manufactured from slightly damp concrete. A variation in the thickness of the tiles in the order of +/-0.5 mm can be achieved after grinding. Height adjustment during laying the floor is thus unnecessary, so that the floor can be laid relatively quickly.

Owing to the relatively strong type of concrete, relatively large tiles can be manufactured with dimensions greater than 1 m x 1 m and a weight above 200 kg. The hollow sound is likewise prevented by the great weight.

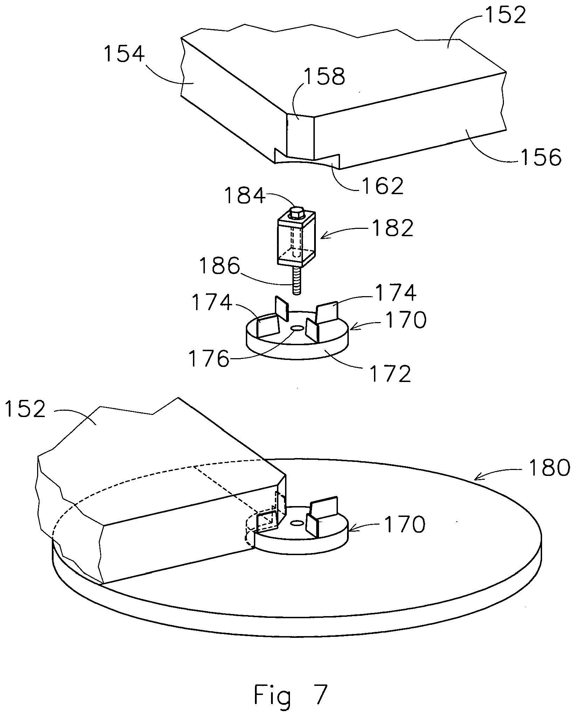

In the embodiment shown in fig. 7 the assembly 150 comprises tiles 152 provided with side walls 154, 156. The corners of tiles 152 are provided with a chamfered part 158. A quarter-circular recess 162 is arranged on the underside of tiles 152 at the corners of the tiles.

The corners of tiles 152 are arranged on tensioning element 170. Tensioning element 170 comprises a disc-shaped part 172 which is provided on a top side with for instance four upright walls 174. Upright walls 174 have a thickness which defines the mutual spacing between adjacent tiles. The corners of tiles 152 are arranged between and connect to two of the upright walls 174. Disc-shaped part 172 has a shape corresponding to recess 162 on the underside of the tiles. Roughly parallel to its central axis the tensioning element is provided with a threaded hole 176.

A support element 180 is arranged under tensioning element 170. Support element 180 is preferably disc-shaped and flexible, i.e. manufactured from an elastic material so as to damp vibrations.

For renovation and fixing of tiles a coupling element 182 is arranged between chamfered parts 158 of the corners of adjacent tiles 152. Coupling element 182 comprises a continuous bolt 184 which is provided with a protruding part 186. With the exception of protruding part 186, coupling element 182 is the same as coupling element 40 shown in fig. 1-3. Bolt 184 is fastened in threaded hole 176 of tensioning element 170 using protruding part 186.

In the manufacture of floor 90 as shown in fig. 5 using an assembly as shown in fig. 1, tiles 2 are produced and cured. The production takes place for instance by pressing concrete in a mould. The thickness of tiles 2 is measured at the corners thereof.

Adjusting elements 10 are available in a number of variants, wherein plate 12 always has a different thickness. The thickness of plates 12 varies in steps, which are small enough to keep the variation in thickness of the tiles within a predetermined range. That is, variations in thickness can be limited to within a desired range in efficient and cost-effective manner by applying plates 12 of a varying thickness. The chosen adjusting elements 10 are then arranged on the underside of the corners of tiles 2.

During laying of floor 90 support elements 32 are for instance arranged on a substrate at predetermined intermediate distances. Tiles 2 provided with adjusting elements 10 are arranged on the respective support elements, wherein protrusions 26 connect to the edges of the support elements.

Coupling elements 40 are then arranged between the corners of adjacent tiles 2. Screw head 50 of cotter bolt 48 is then tightened for the purpose of compressing and expanding middle part 42. The outer walls of the middle part here take on a convex form. Screw head 50 is now tightened until the outer wall of middle part 42 fits onto concave recess 24. A fixation of tiles 2 thus results in both horizontal and vertical direction. This fixation prevents rattling of tiles 2.

The application of a coupling element 60 as shown in fig. 4 takes place in similar manner.

When laying a floor using the embodiment as shown in figure 6, tiles 102 are produced and cured.

The thickness of (the corners of) tiles 102 is then measured. The thickness of tiles 102 is modified, for instance by grinding, such that the variation in thickness of the tiles falls within a predetermined range. This range is for instance in the order of +/- 0.5 mm. Concave recesses 110 are also arranged.

Grinding the corner of the tiles to thickness takes place for instance by creating a quarter-circular recess with a radius in the order of that of support element 126. The corner ground to thickness thus provides for fixation of the support element.

During laying of the floor the support elements 126 with positioning elements 120 thereon are arranged at predetermined intermediate distances on a substrate. Tiles 102 are arranged on the respective support elements, wherein side walls 104, 106 of tiles 102 connect to upright walls 124 of the positioning elements.

Coupling elements 40 or 60 are then arranged between the corners of adjacent tiles 102. Screw head 50 of cotter bolt 48 is then tightened so as to compress and expand middle part 42. The outer walls of the middle part herein take on a convex form. Screw head 50 is now tightened until the outer wall of middle part 42 fits onto concave recess 110. A fixation of tiles 102 is thus created in both horizontal and vertical direction.

Tiles 152 of the embodiment shown in fig. 7 are moulded in a formwork and removed therefrom after curing. To enable removal of cured tiles 152 from the formwork, the round walls of recesses 162 are tapering. That is, the radius of recess 162 becomes greater in the direction of the underside of tiles 152 to be placed on support elements 180.

During laying of the floor the support elements 180 with tensioning elements 170 thereon are arranged on a substrate at predetermined intermediate distances. Tiles 152 are arranged on the respective tensioning elements, wherein side walls 154, 156 of tiles 152 connect to upright walls 174 of the tensioning elements.

For renovation of the thus formed floor and for fixation of tiles in vertical direction, the coupling elements 182 are arranged between chamfered parts 158 of the corners of adjacent tiles 152. Cotter bolt 184 is now tightened until the convex outer wall of middle part 42 of the coupling element fits firmly onto chamfered part 158.

In a practical embodiment the dimensions of coupling element 182 can be varied more than the diameter of tensioning element 170. Where tensioning element 170 has a diameter which can be increased by about 4 mm, coupling element 182 has a cross-sectional dimension which can be varied by 8 to 10 mm by tightening the cotter bolt. Shifting of the coupling element in vertical direction is prevented here in that the protruding part 186 is arranged in threaded hole 176.

A floor formed in one of the above described ways is shown in top view in fig. 5. At the outermost edges such a floor connects with for instance an intermediate space to walls or an outer wall of a building (not shown). The floors formed according to the present invention are provided for this purpose with a so-called edge enclosure. The edge enclosure is a mixture which is arranged in the intermediate space between the outermost edges of the floor and the walls of the building. The mixture comprises for instance rubber granulate, alumina silicate and/or a binder. The alumina silicate is black and comprises for instance 1/3 part grains. The binder is for instance polyurethane glue (PU). The mixture is prepared in situ when laying the floor, and arranged in the intermediate space which is in the order of 4 to 6 cm wide.

In a practical embodiment the tiles of the different embodiments have for instance a length and width of 90 cm x 90 cm, with a weight in the order of 150 kg. In another embodiment the tiles have a length and a width in the order of 110 cm x 110 cm, with a weight in the order of 250 kg.

Concrete is recommended as material for the tiles. In one embodiment slightly damp concrete is applied. The fluctuation in the thickness of the tiles is for instance in the order of +/- 2 mm. When slightly damp concrete is used, the fluctuation in thickness after grinding is for instance in the order of +/- 0.5 mm.

Upright walls 14-20 of the adjusting elements have for instance a thickness in the order of 2 mm. The adjusting elements are for instance manufactured from polystyrene (PS). In order to compensate variations in thickness in the tiles, plates 12 of the adjusting elements are applied in different thicknesses. Five, six or ten different plates can for instance thus be available, with thicknesses varying in steps in the order of 1 mm. The average thickness of plates 12 lies for instance in a range of 1 to 10 mm, depending on mutual variation of the tiles. The effective variation in thickness between adjacent corners of tiles can thus be limited to for instance a maximum of +/- 0.5 mm in relatively simple and inexpensive manner.

The overall thickness, which consists of the thickness of a corner of a tile plus the thickness of the plate of an adjusting element arranged under the corner, can thus be corrected to a determined accuracy. The accuracy is determined by adapting the thickness of the plate of the adjusting element so as to approach as well as possible a desired overall thickness.

Adjusting elements 10 (fig. 1) are for instance connected to the tiles by means of glueing. In an embodiment use is made for glueing purposes of a glue comprising polyurethane (PU). This glue can withstand shear forces up to for instance 1200 kg. If vehicles such as cars with a weight in the order of 3500 kg drive over a floor, shear forces of up to about 500 kg are caused. The assembly according to the present invention is therefore highly suitable for forming a floor over which cars drive, such as on the various floors of multi-storey car parks or on roof car parks.

The side walls of the different tiles are for instance provided with recesses (not shown) for passage of rainwater.

In a practical embodiment the recesses 24, 110 have a wall with a gradual slope so that force in vertical direction increases gradually when the tiles are loaded. The wall of the recess is for instance curved substantially in a single direction or in two directions. In vertical cross-section the recess substantially takes the form of an ellipse. If the wall has a curve in a single direction, the wall is substantially elliptical. If the wall is curved in two directions, the wall takes the form of an ellipsoid.

Fig. 1 and 6 show an example of a single-curve recess 24 and 110 respectively. The form of the recess is a part of a surface of an imaginary cylinder with a longitudinal axis in the plane of the tile.

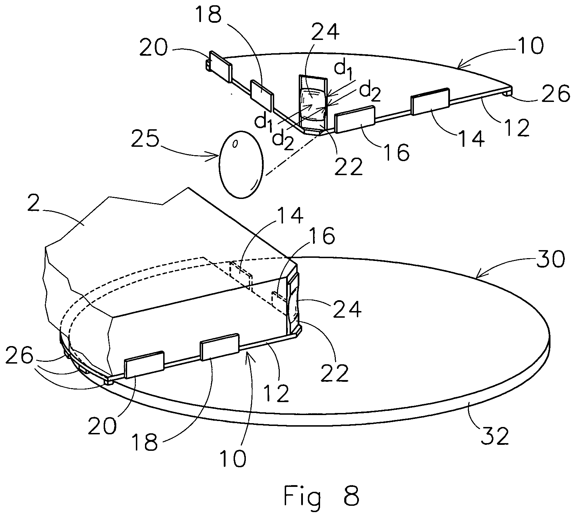

An example of a two-curve recess is shown in fig. 8. The assembly shown in fig. 8 is a detail of the embodiment of fig. 1 and corresponds therewith, with the exception of the recess. Recess 24 curves in two directions. That is, the form of the recess forms a part of the surface of an imaginary egg 25. The thickness d1 in the centre of the recess is smaller than thickness d2 on the side surface of the strip. Thickness d2 is for instance in the order of 2 to 5 mm, for instance 3 mm. Owing to the two-curve form, recess 24 connects better to the outer surface of coupling element 40. In addition, the upright strip has a higher bending stiffness at the position of the recess than in the case of a single-curve recess.

Other forms of the recess with a gradually sloping wall can be envisaged.

The height of recess 24, 110 is about 20% to 50% of the height of the tile or of the height of coupling element 40, 60. Recesses 24, 110 are for instance about 1, 2, 3, 4 or 5 cm high.

The depth of the recess is always small in relation to the height. The force of coupling element exerted in vertical direction on the recess thus increases gradually with an increasing vertical displacement, such as when load increases. The depth of recess 24, 110, extending in the plane of the tiles is about 5% to 25% of the height of the recess. Recesses 24, 110 are for instance about 1, 2, 3, 4 or 5 mm deep. The depth of the recess is smaller than the height, so that the slope of the wall of the recess remains gradual.

When the bolt is tightened in coupling element 40, 60, the outer side thereof will acquire a rounding with substantially the shape of an ellipse or an ellipsoid. The shape of the outer side of the coupling element can fit substantially onto the shape of recess 24, 110.

The outer side of the tensioning element protrudes for instance about 2% to 20% of the height of the tensioning element, or for instance about 1, 2, 3, 4 or 5 mm.

When they are tightened, coupling elements 40, 60 exert a force on the tiles in horizontal direction, i.e. in the plane of the tiles. In addition, the tightened coupling elements exert a force in vertical direction and thus provide for fixation in vertical direction. The vertical force is exerted because the side walls of the coupling elements are substantially elliptical or ellipsoidal when the coupling elements are tightened, i.e. when the cotter bolt is tightened. The side walls can then connect substantially to the elliptical or ellipsoidal walls of recesses 24, 110. In contrast to a flat (tile) wall, recesses 24, 110 can also exert vertical pressure forces in addition to friction force. In the case of a flat wall, only the friction force is available for exerting a vertical pressure force.

Under heavy load the tiles can compress the flexible body of the coupling element. When the load ceases, the flexible body of the coupling element will push the tiles back again into their original position due to the resilience of the material from which it is made.

Rattling of the tiles relative to each other is thus prevented.

The expansion of the coupling elements and their possible co-action with recesses 24, 110 does however allow some relative movement of the tiles in vertical direction. The vertical movement is also made possible by the continuous progression of recess 24, 110. The recess for instance has no sharp transitions, edges, corners.

Fluctuations in thickness of the tiles can here be compensated by the assembly according to the invention. A cost-saving is achieved by compensating the fluctuation in thickness by using adjusting elements of differing thickness. This is because the adjusting elements are made of a cheaper material, and one or more steps of processing the material of the tiles - which is relatively hard and difficult to process - are omitted.

The advantages of the recess and the adjusting elements can be combined, as shown in Fig. 1. Adjusting element 10 makes it possible to compensate fluctuations in thickness, wherein adapting the thickness of the concrete of tiles 2 is unnecessary. Recess 24 is herein arranged in upright strip 22, which connects to the chamfered side 8 of tile 2. Processing of the chamfered side for the purpose of arranging a recess (such as recess 110 in Fig. 6) is thus also unnecessary. Since the concrete is a relatively hard material, the omission of steps for processing the concrete results in a cost advantage and a time saving.

In addition, a chamber arranged in a side wall of a tile, as described in EP-0203226-A1, is precluded from the definition of concave recess 24, 110 according to the present invention. The chamber shown in EP-0203226-A1 comprises three wall parts, i.e. a cylindrical middle wall part which connects at the top and bottom to a conical upper and lower wall part. The upper wall part and the lower wall part connect to the middle wall part at an acute angle, as shown in cross-section in figure 6 of EP-0203226-A1. Since a system according to EP-0203226-A1 as used in practice applies cylindrical coupling elements with a diameter of about 10 cm, the cylindrical wall part of the chambers would have a radius of about 5 cm.

The above described embodiments serve only as example. Many modifications thereof are possible within the scope of the appended claims. Features and elements of individually described embodiments can for instance be applied in combination.

## Claims

1. Assembly for forming a floor on a substrate, comprising:
- a number of tiles (2) arranged substantially in a plane and having a top side, a bottom side and side surfaces (4, 6);
- a coupling element (40) arranged between adjacent tiles (2) and having a dimension which is variable in the direction of the plane,
wherein the coupling element (40) is adapted to engage on an engaging surface coupled to the side surface of a tile, and the coupling element (40) is at least partially elastic, **characterised in that**
the engaging surface comprises a recess (24) with a curved wall having at least an axis of curvature in the plane of the tiles (2) for producing, in co-action with the coupling element (40), a force transversely of the plane of the tiles (2) which gradually increases as load increases.

2. Assembly as claimed in claim 1, wherein the wall of the recess (24) is curved substantially in two directions.

3. Assembly as claimed in claim 1 or 2, wherein the recess (24) has a depth in the range of about 5% to 25% of the height of the recess (24).

4. Assembly as claimed in any of the claims 1-3, wherein the recess (24) is about 1 to 5 mm deep.

5. Assembly as claimed in any of the claims 1-4, wherein the height of the recess (24) is about 20% to 50% of the height of the tiles (2) or of the height of the coupling element (40).

6. Assembly as claimed in any of the claims 1-5, wherein corners of the tiles (2) are provided with a chamfered part (8), and
wherein the recess (24) is arranged in the chamfered part (8) of the tile (2).

7. Assembly as claimed in any of the claims 1-5,
wherein each corner of the tiles (2) is provided with a separate adjusting element (10),
wherein each adjusting element (10) is provided with an upright strip (22) connecting to the respective corner of the tile for the purpose of forming the engaging surface,
wherein the recess (24) is arranged in the upright strip (22).

8. Assembly as claimed in claim 7,
wherein the adjusting element (10) comprises a plate (12) which has a thickness,
wherein the overall thickness, which consists of the thickness of a corner of a tile (2) plus the thickness of the plate (12) of an adjusting element (10) arranged under the corner, can be corrected with a determined accuracy to a predetermined thickness by adapting the thickness of the plate (12) of the adjusting element (10).

9. Assembly as claimed in claim 8, wherein the thicknesses of the plates (12) of different adjusting elements (10) vary in steps in the order of 1 mm.

10. Assembly as claimed in claim 8 or 9, wherein the plate (12) of the adjusting element (10) is provided on the side opposite the upright strip (22) with protrusions (26) which connect to a support element (30) arranged under the plate (12).

11. Assembly as claimed in any of the foregoing claims, wherein the coupling element (60) comprises:
- a first clamping part (40);
- a second clamping part (46);
- a flexible middle part (42) arranged between the first clamping part (40) and the second clamping part (46);
- a bolt (48) arranged through the clamping parts (40, 46) and the middle part (42) for varying the diameter of the middle part (42).

12. Assembly as claimed in claim 11,
wherein the first clamping part (74) has a T-shaped cross-section and a tapering end (76);
wherein the second clamping part (80) has a T-shaped cross-section and wherein an outer end of the second clamping part is provided with an opening (82) for receiving the tapering end (76) of the first clamping part (74); and
wherein the flexible middle part (62) is arranged between the T-parts and round the tapering end (76) of the first clamping part (74) and the outer end of the second clamping part (80).

13. Assembly as claimed in claim 11, or 12,
wherein the coupling element (182) is arranged on a tensioning element (170),
wherein the bolt (184) is longer than the coupling element (182), and
wherein the part (186) of the bolt (184) protruding from the coupling element (182) is arranged in the tensioning element (170).

14. Adjusting element (10) for an assembly as claimed in any of the claims 1-13, comprising:
- a plate (12) to be arranged under a corner of a tile;
- an upright strip (22) connected to the plate (12) and connectable to the corner of the tile (2);
wherein in the upright strip (22) is arranged a recess (24) with a curved wall having at least an axis of curvature in the plane of the tiles (2), such recess being suitable for producing, in co-action with the coupling element (40) of claim 1, a force transversely of the plane of the tiles (2) which gradually increases as load increases.

15. Combination of an adjusting element (10) according to claim 14, and a coupling element (40), the coupling element (40) having a dimension which is variable in the direction of the plane,
wherein the coupling element (40) is adapted to engage on the upright strip (22) and the coupling element (40) is at least partially elastic.

16. Combination of an adjusting element (10) and a coupling element (40) as claimed in claim 15, the coupling element comprising:
- a first clamping part (74) which has a T-shaped cross-section and a tapering end (76);
- a second clamping part (80) which has a T-shaped cross-section and wherein an outer end of the second clamping part (80) is provided with an opening (82) for receiving the tapering end (76) of the first clamping part(74);
- a flexible middle part (62) arranged between the first clamping part (74) and the second clamping part (80);
- a bolt (66) arranged through the clamping parts and the middle part for varying the diameter of the middle part (62),
wherein the flexible middle part (62) is arranged between the T-parts and round the tapering end (76) of the first clamping part (74) and the outer end of the second clamping part (80).

17. Method for forming a floor on a substrate, comprising of:
- arranging substantially in a plane a number of tiles with a top side, a bottom side and side surfaces, wherein a recess with a curved wall having at least an axis of curvature in the plane of the tiles is arranged on one or more of the side surfaces of the tiles;
- arranging a coupling element with a dimension which is variable in the direction of the plane between adjacent tiles,
wherein the coupling element is at least partially elastic, and adapted to engage in the recess for producing a force transversely of the plane of the tiles which gradually increases as load increases.

## Patentansprüche

1. Anordnung zur Bildung eines Bodens auf einem Untergrund, umfassend:
- eine Anzahl von Bodenplatten (2), die im Wesentlichen in einer Ebene angeordnet sind und eine Oberseite, eine Unterseite und Seitenflächen (4, 6) aufweisen;
- ein Koppelelement (40), das zwischen benachbarten Bodenplatten (2) angeordnet ist und eine Abmessung aufweist, die in der Richtung der Ebene variierbar ist,
wobei das Koppelelement (40) dazu eingerichtet ist, an einer Eingriffsfläche einzugreifen, die mit der Seitenfläche einer Bodenplatte gekoppelt ist, und das Koppelelement (40) mindestens teilweise elastisch ist,
**dadurch gekennzeichnet, dass**
die Eingriffsfläche eine Vertiefung (24) mit einer gekrümmten Wand umfasst, die mindestens eine Krümmungsachse in der Ebene der Bodenplatten (2) aufweist, um, in Zusammenwirkung mit dem Koppelelement (40), eine Kraft transversal zur Ebene der Bodenplatten (2) zu produzieren, die bei zunehmender Belastung graduell zunimmt.

2. Anordnung nach Anspruch 1, wobei die Wand der Vertiefung (24) im Wesentlichen in zwei Richtungen gekrümmt ist.

3. Anordnung nach Anspruch 1 oder 2, wobei die Vertiefung (24) eine Tiefe im Bereich von ungefähr 5 % bis 25 % der Höhe der Vertiefung (24) aufweist.

4. Anordnung nach einem der Ansprüche 1-3, wobei die Vertiefung (24) ungefähr 1 bis 5 mm tief ist.

5. Anordnung nach einem der Ansprüche 1-4, wobei die Höhe der Vertiefung (24) ungefähr 20% bis 50% der Höhe der Bodenplatten (2) oder der Höhe des Koppelelements (40) beträgt.

6. Anordnung nach einem der Ansprüche 1-5, wobei Ecken der Bodenplatten (2) mit einem abgefasten Teil (8) versehen sind, und
wobei die Vertiefung (24) in dem abgefasten Teil (8) der Bodenplatte (2) angeordnet ist.

7. Anordnung nach einem der Ansprüche 1-5,
wobei jede Ecke der Bodenplatten (2) mit einem separaten Anpassungselement (10) versehen ist,
wobei jedes Anpassungselement (10) mit einem aufrechten Streifen (22) versehen ist, der an die jeweilige Ecke der Bodenplatte anschließt, zur Bildung der Eingriffsfläche,
wobei die Vertiefung (24) in dem aufrechten Streifen (22) angeordnet ist.

8. Anordnung nach Anspruch 7,
wobei das Anpassungselement (10) eine Platte (12) umfasst, die eine Dicke hat,
wobei die Gesamtdicke, die aus der Dicke einer Ecke einer Bodenplatte (2) plus die Dicke der unter der Ecke angeordneten Platte (12) eines Anpassungselements (10) besteht, mit einer bestimmten Präzision auf eine vorgegebene Dicke korrigiert werden kann, indem die Dicke der Platte (12) des Anpassungselements (10) angepasst wird.

9. Anordnung nach Anspruch 8, wobei die Dickenmaße der Platten (12) verschiedener Anpassungselemente (10) in Schritten in der Größenordnung von 1 mm variieren.

10. Anordnung nach Anspruch 8 oder 9, wobei die Platte (12) des Anpassungselements (10) an der Seite gegenüber dem aufrechten Streifen (22) mit Vorsprüngen (26) versehen ist, die an ein unter der Platte (12) angeordnetes Stützelement (30) anschließen.

11. Anordnung nach einem der vorhergehenden Ansprüche, wobei das Koppelelement (60) umfasst:
- ein erstes Klemmteil (40);
- ein zweites Klemmteil (46);
- ein flexibles Mittelteil (42), das zwischen dem ersten Klemmteil (40) und dem zweiten Klemmteil (46) angeordnet ist;
- einen Bolzen (48), der durch die Klemmteile (40, 46) und das Mittelteil (42) angeordnet ist, zum Variieren des Durchmessers des Mittelteils (42).

12. Anordnung nach Anspruch 11,
wobei das erste Klemmteil (74) einen T-förmigen Querschnitt und ein verjüngtes Ende (76) aufweist;
wobei das zweite Klemmteil (80) einen T-förmigen Querschnitt aufweist, und wobei ein Ende des zweiten Klemmteils mit einer Öffnung (82) zur Aufnahme des verjüngten Endes (76) des ersten Klemmteils (74) versehen ist; und
wobei das flexible Mittelteil (62) zwischen den T-Teilen und um das verjüngte Ende (76) des ersten Klemmteils (74) und das Ende des zweiten Klemmteils (80) angeordnet ist.

13. Anordnung nach Anspruch 11 oder 12,
wobei das Koppelelement (182) an einem Spannelement (170) angeordnet ist,
wobei der Bolzen (184) länger als das Koppelelement (182) ist, und
wobei der von dem Koppelelement (182) vorragende Teil (186) des Bolzens (184) in dem Spannelement (170) angeordnet ist.

14. Anpassungselement (10) für eine Anordnung nach einem der Ansprüche 1-13, umfassend:
- eine Platte (12) zur Anordnung unter einer Ecke einer Bodenplatte;
- einen aufrechten Streifen (22), der mit der Platte (12) verbunden ist und mit der Ecke der Bodenplatte (2) verbindbar ist;
wobei in dem aufrechten Streifen (22) eine Vertiefung (24) mit einer gekrümmten Wand mit mindestens einer Krümmungsachse in der Ebene der Bodenplatten (2) angeordnet ist, wobei eine solche Vertiefung (24) geeignet ist, um, in Zusammenwirkung mit dem Koppelelement (40) nach Anspruch 1, eine Kraft transversal zur Ebene der Bodenplatten (2) zu produzieren, die bei zunehmender Belastung graduell zunimmt.

15. Kombination eines Anpassungselements (10) nach Anspruch 14, und eines Koppelelements (40), wobei das Koppelelement (40) eine Abmessung aufweist, die in der Richtung der Ebene variabel ist,
wobei das Koppelelement (40) dazu angepasst ist, an dem aufrechten Streifen (22) einzugreifen, und das Koppelelement (40) mindestens teilweise elastisch ist.

16. Kombination eines Anpassungselements (10) und eines Koppelelements (40) nach Anspruch 15, wobei das Koppelelement umfasst:
- ein erstes Klemmteil (74), das einen T-förmigen Querschnitt und ein verjüngtes Ende (76) aufweist;
- ein zweites Klemmteil (80), das einen T-förmigen Querschnitt aufweist, und wobei ein Ende des zweiten Klemmteils (80) mit einer Öffnung (82) zur Aufnahme des verjüngten Endes (76) des ersten Klemmteils (74) versehen ist;
- ein flexibles Mittelteil (62), das zwischen dem ersten Klemmteil (74) und dem zweiten Klemmteil (80) angeordnet ist;
- einen Bolzen (66), der durch die Klemmteile und das Mittelteil angeordnet ist, zum Variieren des Durchmessers des Mittelteils (62),
wobei das flexible Mittelteil (62) zwischen den T-Teilen und um das verjüngte Ende (76) des ersten Klemmteils (74) und das Ende des zweiten Klemmteils (80) angeordnet ist.

17. Verfahren zur Bildung eines Bodens auf einem Untergrund, bestehend aus:
- Anordnen, in im Wesentlichen einer Ebene, einer Anzahl von Bodenplatten mit einer Oberseite, einer Unterseite und Seitenflächen, wobei eine Vertiefung mit einer gekrümmten Wand, die mindestens eine Krümmungsachse in der Ebene der Bodenplatten aufweist, an einer oder mehreren der Seitenflächen der Bodenplatten angeordnet ist;
- Anordnen eines Koppelelements mit einer Abmessung, die in der Richtung der Ebene zwischen benachbarten Bodenplatten variierbar ist,
wobei das Koppelelement mindestens teilweise elastisch ist und dazu angepasst ist, in die Ausnehmung einzugreifen, um eine Kraft transversal zur Ebene der Bodenplatten zu produzieren, die bei zunehmender Belastung graduell zunimmt.

## Revendications

1. Ensemble pour créer un sol sur un substrat, comprenant :
- un certain nombre de dalles (2) agencé sensiblement dans un plan et ayant un côté supérieur, un côté inférieur et des surfaces latérales (4, 6) ;
- un élément de couplage (40) agencé entre des dalles adjacentes (2) et ayant une dimension qui peut varier dans la direction du plan,
dans lequel l'élément de couplage (40) est adapté pour venir en prise sur une surface de mise en prise couplée à la surface latérale d'une dalle, et l'élément de couplage (40) est au moins partiellement élastique, **caractérisé en ce que**
la surface de mise en prise comprend un évidement (24) avec une paroi incurvée présentant au moins un axe de courbure dans le plan des dalles (2) pour produire, en co-action avec l'élément de couplage (40), une force transversalement par rapport au plan des dalles (2) qui augmente progressivement à mesure que la charge augmente.

2. Ensemble selon la revendication 1, dans lequel la paroi de l'évidement (24) est incurvée sensiblement dans deux directions.

3. Ensemble selon la revendication 1 ou 2, dans lequel l'évidement (24) a une profondeur dans la plage allant d'environ 5 % à 25 % de la hauteur de l'évidement (24).

4. Ensemble selon l'une quelconque des revendications 1 à 3, dans lequel l'évidement (24) a une profondeur de 1 à 5 mm.

5. Ensemble selon l'une quelconque des revendications 1 à 4, dans lequel la hauteur de l'évidement (24) est d'environ 20 % à 50 % de la hauteur des dalles (2) ou de la hauteur de l'élément de couplage (40).

6. Ensemble selon l'une quelconque des revendications 1 à 5, dans lequel des coins des dalles (2) sont dotés d'une partie chanfreinée (8), et
dans lequel l'évidement (24) est agencé dans la partie chanfreinée (8) de la dalle (2).

7. Ensemble selon l'une quelconque des revendications 1 à 5,
dans lequel chaque coin des dalles (2) est doté d'un élément d'ajustement distinct (10),
dans lequel chaque élément d'ajustement (10) est doté d'une bande verticale (22) se connectant au coin respectif de la dalle dans le but de former une surface de mise en prise,
dans lequel l'évidement (24) est agencé dans la bande verticale (22).

8. Ensemble selon la revendication 7,
dans lequel l'élément d'ajustement (10) comprend une plaque (12) qui présente une épaisseur,
dans lequel l'épaisseur totale, qui est constituée de l'épaisseur d'un coin d'une dalle (2) et de l'épaisseur de la plaque (12) d'un élément d'ajustement (10) agencé sous le coin, peut être corrigée avec une précision déterminée pour atteindre une épaisseur prédéterminée en adaptant l'épaisseur de la plaque (12) de l'élément d'ajustement (10).

9. Ensemble selon la revendication 8, dans lequel les épaisseurs des plaques (12) de différents éléments d'ajustement (10) varient de manière échelonnée de l'ordre de 1 mm.

10. Ensemble selon la revendication 8 ou 9, dans lequel la plaque (12) de l'élément d'ajustement (10) est fournie sur le côté opposé à la bande verticale (22) avec des saillies (26) qui sont liées à un élément de support (30) agencé sous la plaque (12).

11. Ensemble selon l'une quelconque des revendications précédentes, dans lequel l'élément de couplage (60) comprend :
- une première partie de serrage (40) ;
- une seconde partie de serrage (46) ;
- une partie intermédiaire flexible (42) agencée entre la première partie de serrage (40) et la seconde partie de serrage (46) ;
- un boulon (48) agencé à travers les parties de serrage (40, 46) et la partie intermédiaire (42) pour faire varier le diamètre de la partie intermédiaire (42).

12. Ensemble selon la revendication 11,
dans lequel la première partie de serrage (74) présente une section transversale en forme de T et une extrémité effilée (76) ;
dans lequel la seconde partie de serrage (80) présente une section transversale en forme de T et dans lequel une extrémité externe de la seconde partie de serrage est dotée d'une ouverture (82) pour recevoir l'extrémité effilée (76) de la première partie de serrage (74) ; et
dans lequel la partie intermédiaire flexible (62) est agencée entre les parties en T et autour de l'extrémité effilée (76) de la première partie de serrage (74) et de l'extrémité externe de la seconde partie de serrage (80).

13. Ensemble selon la revendication 11 ou 12,
dans lequel l'élément de couplage (182) est agencé sur un élément de tension (170),
dans lequel le boulon (184) est plus long que l'élément de couplage (182), et
dans lequel la partie (186) du boulon (184) faisant saillie depuis l'élément de couplage (182) est agencée dans l'élément de tension (170).

14. Élément d'ajustement (10) pour un ensemble selon l'une quelconque des revendications 1 à 13, comprenant :
- une plaque (12) destinée à être agencée sous un coin d'une dalle ;
- une bande verticale (22) reliée à la plaque (12) et pouvant être reliée au coin de la dalle (2) ;
dans lequel, dans la bande verticale (22), est agencé un évidement (24) avec une paroi incurvée présentant au moins un axe de courbure dans le plan des dalles (2), un tel évidement étant approprié pour produire, en co-action avec l'élément de couplage (40) de la revendication 1, une force transversalement par rapport au plan des dalles (2) qui augmente progressivement à mesure que la charge augmente.

15. Combinaison d'un élément d'ajustement (10) selon la revendication 14 et d'un élément de couplage (40), l'élément de couplage (40) présentant une dimension qui peut varier dans la direction du plan,
dans lequel l'élément de couplage (40) est adapté pour venir en prise sur la bande verticale (22) et l'élément de couplage (40) est au moins partiellement élastique.

16. Combinaison d'un élément d'ajustement (10) et d'un élément de couplage (40) selon la revendication 15, l'élément de couplage comprenant :
- une première partie de serrage (74) présentant une section transversale en forme de T et une extrémité effilée (76) ;
- une seconde partie de serrage (80) présentant une section transversale en forme de T, et dans laquelle une extrémité externe de la seconde partie de serrage (80) est dotée d'une ouverture (82) pour recevoir l'extrémité effilée (76) de la première partie de serrage (74) :
- une partie intermédiaire flexible (62) agencée entre la première partie de serrage (74) et la seconde partie de serrage (80) ;
- un boulon (66) agencé à travers les parties de serrage et la partie intermédiaire pour faire varier le diamètre de la partie intermédiaire (62),
dans laquelle la partie intermédiaire flexible (62) est agencée entre les parties en forme de T et autour de l'extrémité effilée (76) de la première partie de serrage (74) et de l'extrémité externe de la seconde partie de serrage (80).

17. Procédé pour créer un sol sur un substrat, comprenant :
- l'agencement sensiblement dans un plan d'un certain nombre de dalles avec un côté supérieur, un côté inférieur et des surfaces latérales, dans lequel un évidement avec une paroi incurvée présentant au moins un axe de courbure dans le plan des dalles est agencé sur une ou plusieurs des surfaces latérales des dalles ;
- l'agencement d'un élément de couplage avec une dimension qui peut varier dans la direction du plan entre des dalles adjacentes,
dans lequel l'élément de couplage est au moins partiellement élastique, et adapté pour venir en prise dans l'évidement pour produire une force transversalement par rapport au plan des dalles qui augmente progressivement à mesure que la charge augmente.
